# EUROPEAN PATENT APPLICATION

(11) **EP 3 681 246 A1**
(43) Date of publication of application: **15.07.2020**
(21) Application number: 19315003.4
(22) Date of filing: 10.01.2019
(51) Int. Cl.: H04W 88/08

(54) **NETWORK NODE**

(71) Applicant: NTT DOCOMO, INC., Chiyoda-ku Tokyo 100-6150 (JP)
(72) Inventor: Takeda, Shinya, Tokyo, 100-6150 (JP); Ishikawa, Hiroshi, Tokyo, 100-6150 (JP); Hikosaka, Maoki, Tokyo, 100-6150 (JP); Aoyagi, Kenichiro, Tokyo, 100-6150 (JP); Minokuchi, Atsushi, Tokyo, 100-6150 (JP); Al-bakri, Ban, 06160 Juan Les Pins (FR)
(74) Representative: Hoffmann Eitle

(57) **Abstract**

[Problem to be Solved] To control the trigger to update an information element possessed by a user device and to efficiently use radio resources.

[Solution] A network node includes a receiver configured to receive information on an information element possessed by a user device, a controller configured to determine whether the information element possessed by the user device needs to be updated based on the information on the information element possessed by the user device and information on an information element possessed by a network, and a transmitter configured to transmit the information element to the user device based on the determination result.

## Description

### TECHNICAL FIELD

The present invention relates to a network node for a communication system.

### BACKGROUND ART

In 3rd Generation Partnership Project (3GPP), to further increase the system capacity, to further increase the data transfer rate, and to further reduce delays in the radio section, a radio communication technology called 5G or New Radio (NR) is being researched (hereafter, the radio communication technology is referred to as "5G" or "NR"). In 5G, to achieve requirements including a throughput of greater than or equal to 10 Gbps and a delay of less than or equal to 1 ms in the radio section, various radio technologies are being considered.

A network architecture being considered in NR includes 5G Core Network (5GC) corresponding to Evolved Packet Core (EPC) that is a core network in the Long Term Evolution (LTE) network architecture and Next Generation - Radio Access Network (NG-RAN) corresponding to Evolved Universal Terrestrial Radio Access Network (E-UTRAN) that is a radio access network (RAN) in the LTE network architecture (see, for example, Non-patent Document 1).

### [RELATED-ART DOCUMENT]

### [Non-Patent Document]

[Non-Patent Document 1] 3GPP TS 23.501 V15.3.0 (2018-09)

### DISCLOSURE OF INVENTION

### PROBLEMS TO BE SOLVED BY THE INVENTION

In terms of efficient use of radio resources, in a procedure such as a location registration procedure, it is not preferable that a user device receives, from a network, a message including an information element that the user device already possesses and has not been updated by the network.

In view of the above problem, one object of the present invention is to control the trigger to update an information element possessed by a user device and to efficiently use radio resources.

### MEANS FOR SOLVING THE PROBLEMS

An aspect of this disclosure provides a network node that includes a receiver configured to receive information on an information element possessed by a user device, a controller configured to determine whether the information element possessed by the user device needs to be updated based on the information on the information element possessed by the user device and information on an information element possessed by a network, and a transmitter configured to transmit the information element to the user device based on the determination result.

### ADVANTAGEOUS EFFECT OF THE INVENTION

This disclosure makes it possible to control the trigger to update an information element possessed by a user device and to efficiently use radio resources.

### BRIEF DESCRIPTION OF THE DRAWINGS

FIG. 1 is a drawing illustrating a communication system according to an embodiment of the present invention;
FIG. 2 is a drawing illustrating a restriction process according to UAC;
FIG. 3 is a sequence chart illustrating a first example of an ODAC reporting method;
FIG. 4 is a sequence chart illustrating a second example of an ODAC reporting method;
FIG. 5 is a drawing illustrating a first example of an ODAC processing method according to an embodiment of the present invention;
FIG. 6 is a drawing illustrating a second example of an ODAC processing method according to an embodiment of the present invention;
FIG. 7 is a drawing illustrating a functional configuration of a network node 10 according to an embodiment of the present invention;
FIG. 8 is a drawing illustrating a functional configuration of a user device 20 according to an embodiment of the present invention; and
FIG. 9 is a drawing illustrating a hardware configuration of each of the network node 10 and the user device 20 according to an embodiment of the present invention.

### DESCRIPTION OF EMBODIMENTS

Embodiments of the present invention are described below with reference to the accompanying drawings. Embodiments described below are examples, and the present invention is not limited to those embodiments.

In operations of a radio communication system according to an embodiment of the present invention, related-art technologies may also be used as necessary. The related-art technologies are, for example, but are not limited to, current LTE technologies. Unless otherwise mentioned, the term "LTE" used in the present application has a broad meaning and includes LTE-Advanced, systems subsequent to LTE-Advanced (e.g., NR), and a wireless local area network (LAN).

In an embodiment of the present invention, to "configure" radio parameters may indicate that radio parameters are pre-configured using predetermined values, or radio parameters are set to values transmitted from the network node 10 and the user device 20.

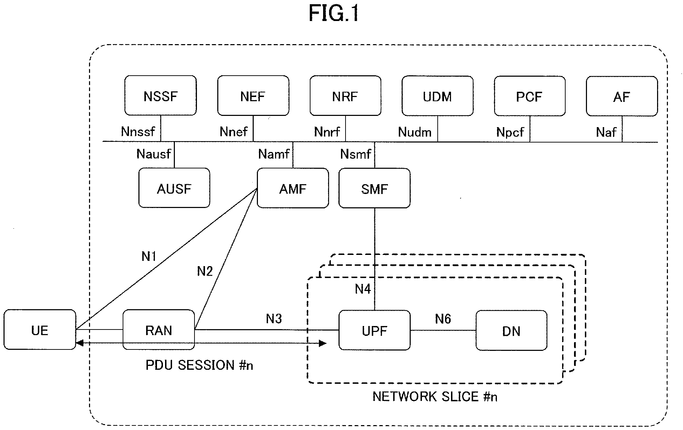

FIG. 1 is a drawing illustrating a communication system according to an embodiment of the present invention. As illustrated in FIG. 1, the communication system includes UE that is a user device 20 and multiple network nodes 10. In the descriptions below, it is assumed that each function is implemented by one network node 10. However, multiple functions may be implemented by one network node 10, or one function may be implemented by multiple network nodes 10. Also, "connection" in the descriptions below may indicate either a logical connection or a physical connection.

A radio access network (RAN) is a network node 10 having a radio access function and is connected to the UE, an access and mobility management function (AMF), and a user plane function (UPF). The AMF is a network node 10 that includes functions such as a RAN interface terminal, a non-access stratum (NAS) terminal, registration management, connection management, reachability management, and mobility management. The UPF is a network node 10 that includes functions such as an external protocol data unit (PDU) session point interconnected with a data network (DN), packet routing and forwarding, and user plane quality of service (QoS) handling. The UPF and the DN constitute a network slice. In a radio communication network according to an embodiment of the present invention, multiple network slices are formed.

The AMF is connected to the UE, the RAN, a session management function (SMF), a network slice selection function (NSSF), a network exposure function (NEF), a network repository function (NRF), an authentication server function (AUSF), a policy control function (PCF), and an application function (AF). The AMF, the SMF, the NSSF, the NEF, the NRF, the AUSF, the PCF, and the AF are network nodes 10 that are connected to each other via interfaces Namf, Nsmf, Nnssf, Nnef, Nnrf, Nausf, Npcf, and Naf that are based on their corresponding services.

The SMF is a network node 10 including a session management function, a UE Internet protocol (IP) address assignment and management function, a dynamic host configuration protocol (DHCP) function, an address resolution protocol (ARP) proxy function, and a roaming function. The NEF is a network node 10 including a function to report capabilities and events to other network functions (NF). The NSSF is a network node 10 including functions to select a network slice to which the UE is connected, to determine network slice selection assistance information (NSSAI), to determine NSSAI to be set, and to determine an AMF set to which the UE is connected. The PCF is a network node 10 including a function for controlling network policies. The AF is a network node 10 including a function for controlling an application server.

Here, Unified Access Control (UAC) is specified as an access control technology for 5G. An access control is a method where access of UE to a network during congestion or failure of the network is controlled by broadcasting information including call types and barring rates of control targets. UAC is a control scheme that is obtained by combining various access control schemes such as Access Class Barring (ACB) and Service Specific Access Control (SSAC) used in LTE. Table 1 indicates access categories in UAC. In UAC, access control is performed for each access category.

**[Table 1]**

| Access Category number | Conditions related to UE | Type of access attempt | Description |
|---|---|---|---|
| 0 | All | MO signalling resu lting from paging | Incoming Call |
| 1 | UE is configured for delay tolerant service and subject to access control for Access Category 1, which is judged based on relation of UE's HPLMN and the selected PLMN. | All except for Emergency | For IoT |
| 2 | All | Emergency | Emergency Call |
| 3 | All except for the conditions in Access Category 1. | MO signaling on N AS level resu lting from other than paging | NAS layer signaling for location registration |
| 4 | All except for the conditions in Access Category 1. | MMTEL voice | Voice Call |
| 5 | All except for the conditions in Access Category 1. | MMTEL video | Video Call |
| 6 | All except for the conditions in Access Category 1. | SMS | SMS |
| 7 | All except for the conditions in Access Category 1. | MO data that do not be long to any other Access Categories (NOTE 4) | Data other than voice, video, and SMS |
| 8 | All except for the conditions in Access Category 1. | MO signalling on RRC level resulting from other than paging | RRC layer signaling |
| 9-31 | | Reserved standar d ized Access Categories | Reserved Range |
| 32-63 | All | Based on operator classification | Range available for operator |

As indicated in Table 1, access category number 0 corresponds to access control for incoming calls. Access category number 1 corresponds to access control for IoT communications. Access category number 2 corresponds to access control for emergency calls. Access category number 3 corresponds to access control for NAS layer signaling such as location registration. Access category number 4 corresponds to access control for voice calls. Access category number 5 corresponds to access control for video calls. Access category number 6 corresponds to access control for SMS. Access category number 7 corresponds to access control for calls other than voice calls, video calls, and SMS. Access category number 8 corresponds to access control for Radio Resource Control (RRC) layer signaling. Access category numbers 9-31 are reserved. Access category numbers 32-63 are specified as Operator Defined Access Categories (ODAC) that are available for operators.

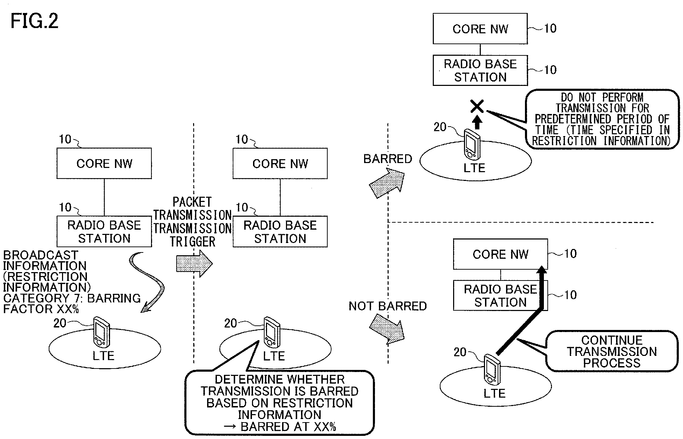

FIG. 2 is a drawing illustrating a restriction process according to UAC. As illustrated in FIG. 2, a communication system includes a radio base station 10, a core NW 10, and a user device 20. The radio base station 10 corresponds to a network node 10 implementing the RAN in FIG. 1, and the core NW 10 corresponds to one or more network nodes 10 including the AMF in FIG. 1. Packet transmission in LTE in a case where category 7 is restricted is described below.

As illustrated in FIG. 2, the radio base station 10 transmits broadcast information to the user device 20. The broadcast information includes restriction information indicating that the barring rate of category 7 is XX%. Category 7 corresponds to "data other than voice, video, and SMS" under category number 7 in Table 1.

Next, when transmitting a packet or "data other than voice, video, and SMS", the user device 20 determines whether the transmission is barred based on the restriction information. Here, the restriction information includes a predetermined threshold (ac-BarringFactor) indicating that the barring rate of category 7 is XX%, and the transmission is barred at a probability of XX%. Whether the transmission is barred is determined according to a method similar to that in ACB in LTE. That is, the user device 20 generates a random number that is greater than or equal to 0 and less than 1, bars the transmission if the random number is greater than or equal to the predetermined threshold (ac-BarringFactor), and does not bar the transmission if the random number is less than the predetermined threshold.

When the transmission is barred, the user device 20 does not perform transmission for a certain period of time. The user device 20 may be configured to generate a random number greater than or equal to 0 and less than 1 and calculate the period of time for which transmission is barred (transmission-barred time) by using a formula "(0.7 + 0.6 × random number) × predetermined time period (ac-BarringTime)". The predetermined time period (ac-BarringTime) is included in the restriction information. If an RRC connection establishment request is generated during the transmission-barred time, transmission is barred. On the other hand, when the transmission is not barred, the user device 20 continues the transmission process.

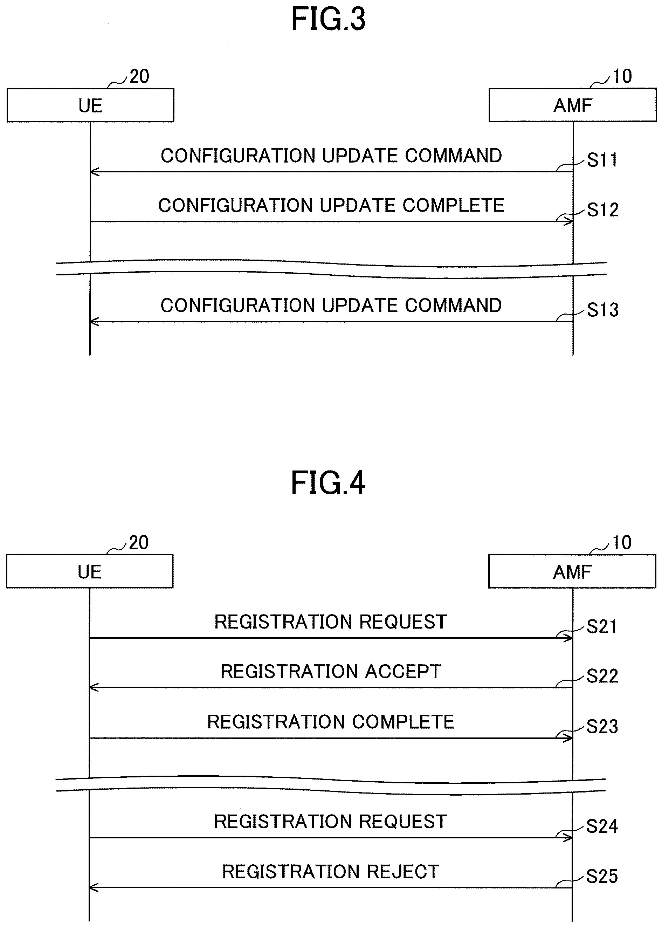

FIG. 3 is a sequence chart illustrating a first example of an ODAC reporting method. As described above, access category numbers 32-63 are specified as ODAC that are available for operators. For example, transmission using one of parameters a) through d) below may be restricted. Also, transmission using a parameter other than parameters a) through d) may be restricted according to ODAC.

### a) Data Network Name (DNN)

The DNN is a parameter indicating a destination APN.

### b) 5G QoS Identifier (5QI)

The 5QI is a parameter indicating a QoS. For example, the 5QI indicates a QoS type of a packet such as guaranteed bit rate (GBR) or non-GBR.

### c) OS Id and OS App Id of application triggering access attempt

The OS Id and the OS App Id indicate an identifier and an application identifier defined for each OS.

### d) Single Network Slice Selection Assistance Information (S-NSSAI)

The S-NSSAI is an identifier for determining a network slice to be connected.

Here, ODAC may be reported by a configuration update command transmitted from the AMF 10 to the UE 20. At step S11, the AMF 10 transmits a configuration update command including ODAC to the UE 20. The UE 20 updates the ODAC. Next, the UE 20 transmits a configuration update complete to the AMF 10 (S12).

As another example, as indicated by step S13, an ODAC updating sequence may be completed by just transmitting a configuration update command from the AMF 10 to the UE 20.

FIG. 4 is a sequence chart illustrating a second example of an ODAC reporting method. For example, ODAC may be reported by a registration accept transmitted from the AMF 10 to the UE 20. At step S21, the UE 20 transmits a registration request to the AMF 10. Next, the AMF 10 transmits a registration accept including ODAC to the UE 20. Then, the UE 20 transmits a registration complete to the AMF 10 (S23).

As another example, as indicated by steps S24 and S25, ODAC may be updated by transmitting a registration reject including ODAC from the AMF 10 to the UE 20.

Here, ODAC tends to have a large size. Therefore, particularly in a location registration procedure, if ODAC is reported every time even when the ODAC is not updated, radio resources are wasted. For example, when a long DNN is specified for every one of categories 32-63, the size of ODAC becomes large. For the above reasons, a framework where ODAC is not reported from the network to a user device when the update of ODAC is not necessary is considered below.

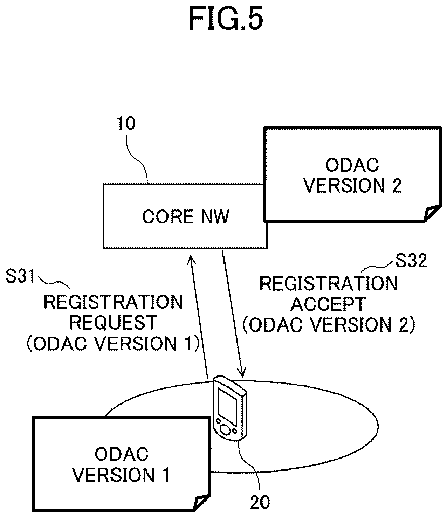

FIG. 5 is a drawing illustrating a first example of an ODAC processing method according to an embodiment of the present invention. The network attaches information indicating, for example, a version, an updated date, or an ID to ODAC. That is, the network attaches, to ODAC, information for identifying the contents of the ODAC. The UE 20 transmits information on ODAC stored in the UE 20 to the network. When the information received from the UE 20 does not match information on ODAC being held by the network, the network transmits information including the ODAC to the UE 20. The updated date may include a time. The ID may be an ID of a public land mobile network (PLMN) or an ID of ODAC itself. The ID of PLMN may be used while the UE 20 is in the roaming mode. The information on the ODAC being held by the network may be information on the latest ODAC. The core NW 10 in FIG. 5 may be an AMF.

In the example described below, it is assumed that information indicating a version is attached to ODAC. At step S31, the UE 20 includes information indicating that the UE 20 possesses "ODAC version 1" in a registration request, and transmits the registration request to the core NW 10. Because the core NW 10 has "ODAC version 2", the core NW 10 determines that the ODAC of the UE 20 needs to be updated. Then, the core NW 10 transmits a registration accept including "ODAC version 2" to the UE 20 (S32). The information indicating the version in FIG. 5 may be an updated date or an ID. Also, the registration request in FIG. 5 may be replaced with a different type of message.

Here, if the core NW 10 has "ODAC version 1" that is the same as "ODAC version 1" possessed by the UE 20, the core NW 10 determines that the update of ODAC of the UE 20 is not necessary. In this case, the core NW 10 does not transmit the ODAC to the UE 20 at step S32.

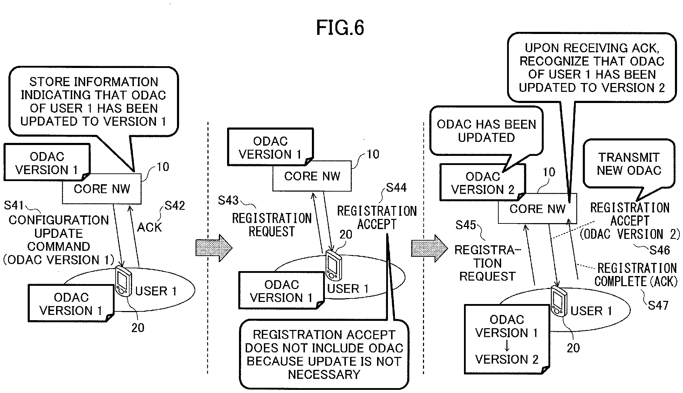

FIG. 6 is a drawing illustrating a second example of an ODAC processing method according to an embodiment of the present invention. When ODAC of the UE 20 is updated, the network stores the version of the ODAC possessed by the UE 20. Thereafter, the network transmits ODAC to the UE 20 only when it is necessary, for example, when ODAC is updated. The core NW 10 in FIG. 6 may be the AMF. The user 1 in FIG. 6 may correspond to a subscriber.

At step S41, the core NW 10 transmits a configuration update command including "ODAC version 1" to the UE 20 being used by the user 1 and requests the UE 20 to update ODAC. Next, the UE 20 transmits ACK to the core NW 10 (S42). Then, the core NW 10 stores information indicating that the ODAC of the user 1 has been updated to "ODAC version 1". That is, the core NW 10 stores information indicating "ODAC version 1" in association with the user 1. On the other hand, when NACK is received from the UE 20 or ACK is not received from the UE 20 for a predetermined period of time, the core NW 10 does not store information indicating that the ODAC of the user 1 has been updated to "ODAC version 1".

Step S43 is performed following step S42. At step S43, the UE 20 transmits a registration request to the core NW 10. At step S44, because the core NW 10 has "ODAC version 1" and retains the information indicating that the ODAC of the user 1 has been updated to "ODAC version 1", the core NW 10 determines that it is not necessary to update the ODAC of the user 1. Accordingly, the core NW 10 does not include ODAC information in the registration accept transmitted to the UE 20 at step S44.

Step S45 is performed following step S42 or S44. At step S45, the UE 20 having "ODAC version 1" transmits a registration request to the core NW 10. At step S46, because the core NW 10 has "ODAC version 2" and retains the information indicating that the ODAC of the user 1 has been updated to "ODAC version 1", the core NW 10 determines that it is necessary to update the ODAC of the user 1. At step S46, the core NW 10 transmits a registration accept including "ODAC version 2" to the UE 20. Next, the UE 20 transmits a registration complete including or indicating ACK to the core NW 10 (S47). Then, the core NW 10 stores information indicating that the ODAC of the user 1 has been updated to "ODAC version 2". That is, the core NW 10 stores information indicating "ODAC version 2" in association with the user 1.

Embodiments of the present invention are described above using ODAC as an example. However, the above embodiments may also be applied to other information elements. For example, information elements 1) and 2) below tend to have large sizes. Therefore, applying the above described embodiments to these information elements makes it possible to efficiently use radio resources.

### 1) Emergency Number List (ENL)

ENL is a list that associates emergency call numbers with emergency service categories. For example, ENL indicates that 110 corresponds to the police. ENL is reported from the network to the UE 20 via an attach accept in Universal Mobile Telecommunications System (UMTS) or LTE and a registration accept in 5G. When an emergency call number included in ENL is dialed, the UE 20 performs an emergency call by setting the corresponding service category as the destination.

### 2) Extended Emergency Number List (EENL)

EENL is a list obtained by extending ENL to support IP Multimedia Subsystem (IMS) voice. EENL associates emergency call numbers with Session Initiation Protocol (SIP) Uniform Resource Names (URN) instead of service categories. For example, EENL indicates that 110 corresponds to "urn:service:sos.police". EENL is reported from the network to the UE 20 via an attach accept in UMTS or LTE and a registration accept in 5G. When an emergency call number included in EENL is dialed, the UE 20 performs an emergency call by setting the corresponding SIP URN as the destination.

According to the above embodiments, information for identifying ODAC possessed by the UE 20 is reported to the network, and the network compares the ODAC possessed by the UE 20 with the ODAC possessed by the network itself. If the ODAC possessed by the UE 20 does not match the ODAC possessed by the network, the network transmits the ODAC possessed by the network to cause the UE 20 to update the ODAC. Also in the above embodiments, the network stores information for identifying the ODAC updated by the UE 20 after receiving ACK from the UE 20 so that the network can determine whether the ODAC of the UE 20 needs to be updated and transmit ODAC to the UE 20 when the update is necessary. Thus, the above embodiments enable the communication system to efficiently use radio resources.

In other words, the above embodiments make it possible to control the trigger to update an information element possessed by a user device and to efficiently use radio resources.

### <CONFIGURATIONS OF DEVICES>

Next, examples of functional configurations of the network node 10 and the user device 20 that perform the above-described processes and operations are described. Each of the network node 10 and the user device 20 includes functions for performing processes according to the above-described embodiments. However, each of the network node 10 and the user device 20 may include a part of functions for performing processes according to the above-described embodiments.

### <NETWORK NODE 10>

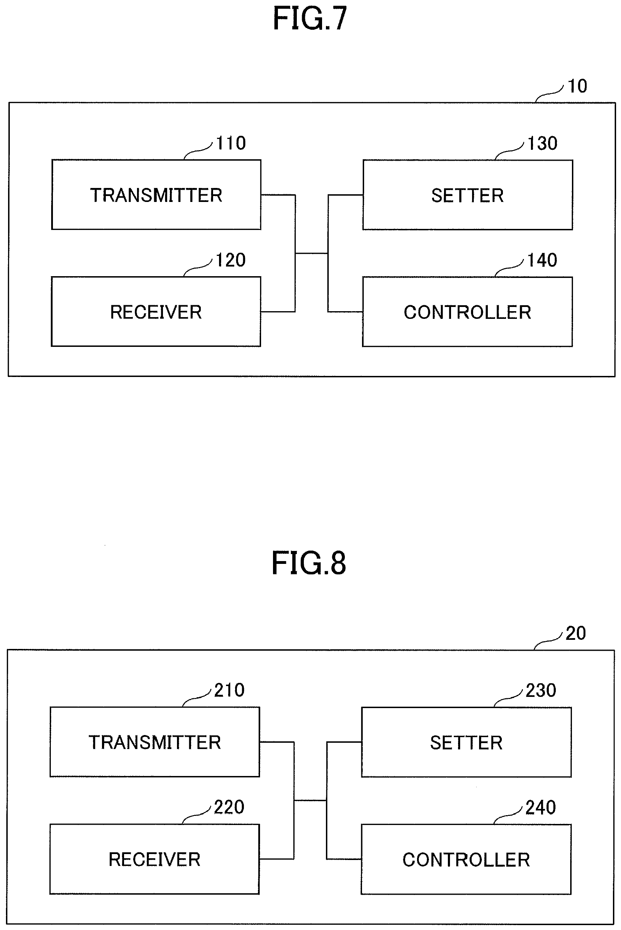

FIG. 7 is a drawing illustrating a functional configuration of the network node 10. As illustrated in FIG. 7, the network node 10 includes a transmitter 110, a receiver 120, a setter 130, and a controller 140. The functional configuration of FIG. 7 is just an example. As long as operations according to the embodiments of the present invention can be performed, the categorization and the names of the functional components may be freely changed. Also, a network node 10 including multiple different functions in the system architecture may be implemented by separate network nodes 10 having the corresponding functions.

The transmitter 110 includes functions to generate signals and transmit the signals to the user device 20 and other network nodes 10 via wired or wireless communications. The receiver 120 includes functions to receive various signals from the user device 20 and other network nodes 10 and obtain, for example, upper layer information from the received signals.

The setter 130 stores preset configuration information and various types of configuration information to be transmitted to the user device 20 in a storage and reads the configuration information from the storage as necessary. The configuration information includes, for example, information on UAC and ODAC information for the user device 20.

The controller 140 performs access control processes for the user device 20 according to UAC as described in the above embodiments. The controller 140 also performs a process for transmitting ODAC information to the user device 20. A functional component of the controller 140 for signal transmission may be included in the transmitter 110, and a functional component of the controller 140 for signal reception may be included in the receiver 120.

### <USER DEVICE>

FIG. 8 is a drawing illustrating a functional configuration of the user device 20. As illustrated in FIG. 8, the user device 20 includes a transmitter 210, a receiver 220, a setter 230, and a controller 240. The functional configuration of FIG. 8 is just an example. As long as operations according to the embodiments of the present invention can be performed, the categorization and the names of the functional components may be freely changed.

The transmitter 210 generates a transmission signal from transmission data and wirelessly transmits the transmission signal. The receiver 220 wirelessly receives various signals and obtains upper layer signals from the received physical layer signals. The receiver 220 also includes a function to receive an NR-PSS, an NR-SSS, an NR-PBCH, and DL/UL control signals or reference signals.

The setter 230 stores various types of configuration information received by the receiver 220 from the network node 10 in a storage and reads the configuration information from the storage as necessary. The setter 230 also stores preset configuration information. The configuration information includes, for example, information on UAC and ODAC information.

The controller 240 performs access control processes based on the ODAC information according to UAC as described in the above embodiments. The controller 240 also controls a process for receiving the ODAC information. A functional component of the controller 240 for signal transmission may be included in the transmitter 210, and a functional component of the controller 240 for signal reception may be included in the receiver 220.

### <HARDWARE CONFIGURATION>

The block diagrams (FIGs. 7 and 8) used in the above description illustrate functional blocks. Those functional blocks (components) may be implemented by hardware, software, or a combination of hardware and software. Also, the functional blocks may be implemented by any appropriate means. That is, each functional block may be implemented by one apparatus that is physically or logically integrated, or by two or more physically or logically separate apparatuses that are directly or indirectly connected (via lines and/or wirelessly) to each other. Each functional block may also be implemented by combining the one apparatus or the two or more apparatuses with software.

Examples of functions include, but are not limited to, determining, deciding, judging, calculating, computing, processing, deriving, investigating, searching, confirming, receiving, transmitting, outputting, accessing, solving, selecting, adopting, establishing, comparing, assuming, expecting, presuming, broadcasting, notifying, communicating, forwarding, configuring, reconfiguring, allocating, mapping, and assigning. For example, a functional block (or functional component) for transmitting may be referred to as a transmitting unit or a transmitter. As described above, the functional block may be implemented by any appropriate means.

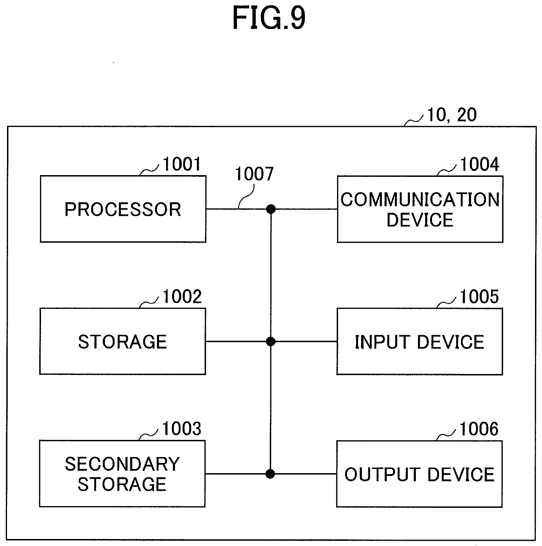

For example, the network node 10 and the user device 20 may be implemented by computers that perform radio communication methods of the embodiments. FIG. 9 is a drawing illustrating a hardware configuration of each of the network node 10 and the user device 20 according to an embodiment of the present invention. Physically, each of the network node 10 and the user device 20 may be implemented by a computer including a processor 1001, a storage 1002, a secondary storage 1003, a communication device 1004, an input device 1005, an output device 1006, and a bus 1007.

In the descriptions below, the term "device" may be replaced with, for example, "circuit", "module", or "unit". The hardware configuration of the network node 10 and the user device 20 may include one or more components illustrated in FIG. 9 and may not necessarily include all of the components.

Functions of the network node 10 and the user device 20 may be implemented by loading software (programs) into hardware components such as the processor 1001 and the storage 1002, executing the loaded software by the processor 1001, and thereby controlling communications performed by the communication device 1004 and data read/write operations of the storage 1002 and the secondary storage 1003.

The processor 1001, for example, runs an operating system to control the entire computer. The processor 1001 may be implemented by a central processing unit (CPU) that includes interfaces with peripheral devices, a controller, an arithmetic unit, and registers. For example, the controller 140 and the controller 240 may be implemented by the processor 1001.

The processor 1001 loads programs (program code), software modules, and data from the secondary storage 1003 and/or the communication device 1004 into the storage 1002, and performs various processes according to the loaded programs, software modules, and data. The programs cause the computer to perform at least a part of the processes described in the above embodiments. For example, the controller 140 of the network node 10 in FIG. 7 may be implemented by a control program that is stored in the storage 1002 and executed by the processor 1001. Also, the controller 240 of the user device 20 in FIG. 8 may be implemented by a control program that is stored in the storage 1002 and executed by the processor 1001. The processes described above may be performed by one processor 1001 or may be performed concurrently or sequentially by two or more processors 1001. The processor 1001 may be implemented by one or more chips. The programs may be received from a network via a telecommunication line.

The storage 1002 is a computer-readable storage medium and may be implemented by, for example, at least one of a read-only memory (ROM), an erasable programmable ROM (EPROM), an electrically-erasable programmable ROM (EEPROM), and a random access memory (RAM). The storage 1002 may also be referred to as a register, a cache, or a main memory. The storage 1002 can store programs (program code) and software modules that are executable to perform communication methods of the above embodiments.

The secondary storage 1003 is a computer-readable storage medium and may be implemented by, for example, at least one of an optical disk such as a compact-disk ROM (CD-ROM), a hard disk drive, a flexible disk, a magneto-optical disk (e.g., a compact disk, a digital versatile disk, or a Blu-ray (registered trademark) disk), a smart card, a flash memory (e.g., a card drive, a stick drive, or a key drive), a floppy (registered trademark) disk, and a magnetic strip. The storage medium described above may also be implemented by any other appropriate medium such as a database or a server that includes at least one of the storage 1002 and the secondary storage 1003.

The communication device 1004 is a hardware component (transceiver device) for communicating with other computers via at least one of a wired network and a wireless network. The communication device 1004 may also be referred to as a network device, a network controller, a network card, or a communication module. The communication device 1004 may include a highfrequency switch, a duplexer, a filter, and a frequency synthesizer to achieve at least one of frequency division duplex (FDD) and time division duplex (TDD). For example, a transmission/reception antenna, an amplifier, a transceiver, and a transmission interface may be implemented by the communication device 1004. The transceiver may be physically or logically separated into a transmitter and a receiver.

The input device 1005 receives external inputs and may be implemented by, for example, a keyboard, a mouse, a microphone, switches, buttons, and sensors. The output device 1006 is an external output device (e.g., a display, a speaker, and/or an LED lamp). The input device 1005 and the output device 1006 may be implemented as a single component (e.g., a touch panel).

The above-described devices including the processor 1001 and the storage 1002 are connected to each other via a bus 1007 for communication. The bus 1007 may be implemented by a single bus, or may be implemented by multiple buses connecting the corresponding devices.

Each of the network node 10 and the user device 20 may include hardware components such as a microprocessor, a digital signal processor (DSP), an application specific integrated circuit (ASIC), a programmable logic device (PLD), and/or a field programmable gate array (FPGA), and some or all of the functional blocks may be implemented by these hardware components. For example, the processor 1001 may be implemented by at least one of these hardware components

### <SUMMARY OF EMBODIMENTS>

As described above, an embodiment of the present invention provides a network node including a receiver configured to receive information on an information element possessed by a user device, a controller configured to determine whether the information element possessed by the user device needs to be updated based on the information on the information element possessed by the user device and information on an information element possessed by the network, and a transmitter configured to transmit the information element to the user device based on the determination result.

According to the above configuration, information for identifying ODAC possessed by the UE 20 is reported to the network, and the network compares the ODAC possessed by the UE 20 with the ODAC possessed by the network itself. If the ODAC possessed by the UE 20 does not match the ODAC possessed by the network, the network transmits the ODAC possessed by the network to cause the UE 20 to update the ODAC. That is, the above configuration makes it possible to control the trigger to update an information element possessed by a user device and to efficiently use radio resources.

The information on the information element possessed by the user device may be first information for identifying Operator Defined Access Categories (ODAC) included in a location registration request message, and the information on the information element possessed by the network may be second information for identifying ODAC. This configuration makes it possible to control the trigger to update an information element possessed by a user device based on information for identifying ODAC included in a registration request.

The controller may be configured to determine whether the information element possessed by the user device needs to be updated by comparing the first information for identifying the ODAC with the second information for identifying the ODAC. This configuration makes it possible to control the trigger to update an information element possessed by a user device based on information for identifying ODAC included in a registration request.

The information on the information element possessed by the user device may be acknowledgement returned in response to ODAC transmitted to the user device. Based on the acknowledgement, the controller may store first information for identifying the ODAC transmitted to the user device in association with the user device. This configuration enables the network to store information for identifying the ODAC updated by the UE 20 after receiving ACK from the UE 20 so that the network can determine whether the ODAC of the UE 20 needs to be updated and transmit ODAC to the UE 20 when the update is necessary.

The information on the information element possessed by the network is second information for identifying ODAC. When receiving a location registration request message from the user device, the controller may determine whether the information element possessed by the user device needs to be updated by comparing the first information for identifying the ODAC with the second information for identifying the ODAC. This configuration enables the network to compare information for identifying the ODAC updated by the UE 20 with information for identifying the ODAC possessed by the network and to transmit the ODAC to the UE 20 when it is determined that the update of the ODAC of the UE 20 is necessary.

### <SUPPLEMENTARY DESCRIPTION OF EMBODIMENTS>

Embodiments of the present invention are described above. However, the present invention is not limited to the above-described embodiments, and a person skilled in the art may understand that variations, modifications, and replacements may be made to the above embodiments. Although specific values are used in the above descriptions to facilitate the understanding of the present invention, the values are just examples and other appropriate values may also be used unless otherwise mentioned. Grouping of subject matter in the above descriptions is not essential for the present invention. For example, subject matter described in two or more sections may be combined as necessary, and subject matter described in one section may be applied to subject matter described in another section unless they contradict each other. Boundaries of functional units or processing units in functional block diagrams do not necessarily correspond to boundaries of physical components. Operations of multiple functional units may be performed by one physical component, and an operation of one functional unit may be performed by multiple physical components. The order of steps in processes described in the embodiments may be changed as long as the consistency of the steps is maintained. Although functional block diagrams are used to describe the network node 10 and the user device 20, the network node 10 and the user device 20 may be implemented by hardware, software, or a combination of them. Software to be executed by a processor of the network node 10 and software to be executed by a processor of the user device 20 according to the embodiments of the present invention may be stored in any appropriate storage medium such as a random access memory (RAM), a flash memory, a read-only memory (ROM), an EPROM, an EEPROM, a register, a hard disk drive (HDD), a removable disk, a CD-ROM, a database, or a server.

Information may also be reported using methods other than those described in the above embodiments. For example, information may be reported by physical layer signaling (e.g., downlink control information (DCI), uplink control information (UCI)), upper layer signaling (e.g., radio resource control (RRC) signaling, medium access control (MAC) signaling, broadcast information (master information block (MIB), system information block (SIB))), other signals, or a combination of them. Also, RRC signaling may be referred to as an RRC message and may be, for example, an RRC connection setup message or an RRC connection reconfiguration message.

The above-described embodiments may be applied to at least one of systems employing LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-Wideband), Bluetooth (registered trademark), and any other appropriate system, and a next generation system implemented by extending any one of these systems. Also, the above embodiments may be applied to a combination of multiple systems (e.g., a combination of at least one of LTE and LTE-A and 5G).

The order of steps in sequence charts and flowcharts described in the embodiments may be changed as long as the consistency of the steps is maintained. For example, the order of steps in a method described in the above embodiments is an example and may be changed to any appropriate order.

Specific operations performed by the network node 10 in the present application may be performed by an upper node of the network node 10. In a network comprised of one or more network nodes including the network node 10, various operations performed for communication with the user device 20 may be performed by at least one of the network node 10 and a network node (which is, for example, but is not limited to, MME or S-GW) other than the network node 10. In the above example, it is assumed that there is one network node other than the network node 10. However, there may be two or more types of network nodes (e.g., MME and S-GW) other than the network node 10.

Information or signals described in the present application may be output from the upper layer (or the lower layer) to the lower layer (or the upper layer), and may be input and output via multiple network nodes.

Input/output information may be stored in a specific location (e.g., in a memory), or may be managed using a management table. Input/output information may be overwritten, updated, or added. Output information may be removed. Input information may be transmitted to another apparatus.

In the present application, decision may be made based on a one-bit value (0 or 1) or a truth value (Boolean: true or false), or by comparison of values (e.g., comparison with a predetermined value).

Regardless of whether software is called software, firmware, middleware, a microcode, a hardware description language, or by any other name, software can be interpreted widely to mean a command, a command set, a code, a code segment, a program code, a program, a subprogram, a software module, an application, a software application, a software package, a routine, a subroutine, an object, an executable file, an execution thread, a procedure, or a function,.

Also, software, commands, and information may be transmitted and received via a transmission medium. For example, when software is transmitted from a web site, a server, or any other remote source using a wired technology such as a coaxial cable, a fiber optic cable, a twisted pair, or a digital subscriber line (DSL) and/or a wireless technology such as infrared rays or a microwave, at least one of the wired technology and the wireless technology is within the definition of the transmission medium.

Information and signals described in the present application may be represented by using various different technologies. For example, data, instructions, commands, information, signals, bits, symbols, and chips in the above descriptions may be represented by voltages, electric currents, electromagnetic waves, magnetic fields, magnetic particles, optical fields, photons, or any combination of them.

Terms described in the present application and terms necessary to understand the present application may be replaced with terms having the same or similar meanings. For example, a channel and/or a symbol may be replaced with a signal (signaling). Also, a signal may be replaced with a message. A component carrier (CC) may be referred to as a carrier frequency, a cell, or a frequency carrier.

In the present application, the terms "system" and "network" may be used interchangeably.

Also, information and parameters described in the present application may be represented by absolute values, may be represented by relative values relative to predetermined values, or may be represented by other types of information. For example, radio resources may be indicated by indices.

The names used for the above-described parameters are not exclusive names. Also, formulas using those parameters are not limited to those disclosed in the present application. Various channels (e.g., PUCCH and PDCCH) and information elements may be identified by any appropriate names. Accordingly, the names assigned to the channels and the information elements do not limit the channels and the information elements in any respect.

In the present application, terms such as "base station (BS)", "radio base station, "base station apparatus", "fixed station", "NodeB", "eNodeB (eNB)", "gNodeB (gNB)", "access point", "transmission point", "reception point", "transmission/reception point", "cell,", "sector", "cell group", "carrier", and "component carrier" may be used interchangeably. The base station may also be referred to as a macro cell, a small cell, a Femto cell, or a pico cell.

The base station can accommodate one or more (for example, three) cells. When the base station accommodates multiple cells, the entire coverage area of the base station may be divided into multiple smaller areas, and each of the smaller areas may provide a communication service through a base station subsystem (for example, a small indoor base station (RRH: remote radio head). The term "cell" or "sector" refers to a part or the entirety of the coverage area of at least one of the base station and the base station subsystem that provides a communication service in this coverage.

In the present application, the terms "mobile station (MS)", "user terminal", "user equipment UE", and "terminal" may be used interchangeably.

Depending on persons skilled in the art, the mobile station may be called by any other appropriate term such as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, or a client.

At least one of the base station and the mobile station may be referred to as a transmission apparatus, a reception apparatus, or a communication apparatus. At least one of the base station and the mobile station may be a device mounted on a mobile body or the mobile body itself. The mobile body may be a vehicle (e.g., automobile or aircraft), an unmanned mobile body (e.g., drone or self-guided vehicle), or a robot (manned or unmanned). At least one of the base station and the mobile station may be an apparatus that does not move during communications. For example, at least one of the base station and the mobile station may be an Internet of Things (IoT) device such as a sensor.

Also, the base station in the present application may be replaced with a user terminal. For example, embodiments of the present invention may be applied to a configuration where communications between the base station and the user terminal are replaced with communications (e.g., device-to-device (D2D) or vehicle-to-Everything (V2X) communications) between multiple user devices 20. In this case, the user device 20 may have the functions of the network node 10. Also, terms such as "uplink" and "downlink" may be replaced with a term such as "side" used in terminal-to-terminal communications. For example, an uplink channel and a downlink channel may be replaced with side channels.

Similarly, the user terminal in the present application may be replaced with a base station. In this case, the base station may have the functions of the user terminal.

In the present application, the term "determining" may indicate various operations. For example, "determining" may indicate that one of "judging", "calculating", "computing", "processing", "deriving", "investigating", "looking up (searching, inquiring)" (e.g., searching a data structure such as a table or a database), and "ascertaining" has been performed. Also, "determining" may indicate that one of "receiving" (e.g., reception of information), "transmitting" (e.g., transmission of information), "inputting", "outputting", and "accessing" (e.g., accessing data in a memory) has been performed. Further, "determining" may indicate that one of "resolving", "selecting", "choosing", establishing", and "comparing" has been performed. Thus, "determining" may indicate that an operation has been performed. Also, "determining" may be replaced with a term such as "assuming", "expecting", or "considering".

Terms "connected", "coupled", or variations thereof means any direct or indirect connection or coupling between two or more elements and may include the presence of one or more intermediate elements between two elements which are "connected" or "coupled". The coupling or the connection between the elements may be physical, logical, or a combination thereof. For example, "connecting" may be replaced with "accessing". When used in this application, two elements may be considered to be "connected" or "coupled" with each other using one or more electric wires, cables, and/or a printed electrical connection or using electromagnetic energy having a wavelength in a radio frequency region, a microwave region, or an optical (both visible and invisible) region as non-limiting and non-comprehensive examples.

A reference signal may be abbreviated as RS and may be referred to as a pilot depending on a standard to be applied.

In the present application, "based on" does not mean "based only on" unless otherwise mentioned. In other words, "based on" can mean both "based only on" and "based at least on".

In the present application, terms such as "first" and "second" used to refer to elements do not generally indicate the quantity or the order of those elements. In the present application, such terms may be used to distinguish two or more elements from each other. Accordingly, a first element and a second element do not necessarily indicate that there are only two elements and that the first element needs to come before the second element.

Components in the apparatuses described above may also be referred to as "units", "parts", "circuits", or "devices".

In the present application, similarly to the term "comprising", the terms "include" and "including" and variations thereof are open-ended terms. Also, in the present application, the term "or" does not indicate exclusive OR.

When an article "a", "an", or "the" is attached to a noun in the English translation of the present application, the noun following the article may indicate plural elements.

In the present application, "A and B differ" may indicate that "A and B differ from each other" or "A and B differ from C". This also applies to terms such as "separate" and "couple".

The above-described embodiments may be used separately or in any combination, and may also be switched during a process. Predetermined information (e.g., "A is X") may be reported explicitly or implicitly (e.g., by not reporting the predetermined information).

In the present application, the AMF and the core NW are examples of network nodes. ODAC is an example of an information element. Information for identifying ODAC is an example of information on an information element possessed by a user device. A registration request is an example of a location registration request message. ACK is an example of an acknowledgment.

Embodiments of the present invention are described above. However, the present invention is not limited to the above-described embodiments, and a person skilled in the art may understand that variations, modifications, and replacements may be made without departing from the scope of the present invention. Thus, the above-described embodiments are examples and are not intended to limit the present invention.

### EXPLANATION OF REFERENCE NUMERALS

- 10: Network node
- 110: Transmitter
- 120: Receiver
- 130: Setter
- 140: Controller
- 20: User device
- 210: Transmitter
- 220: Receiver
- 230: Setter
- 240: Controller
- 1001: Processor
- 1002: Storage
- 1003: Secondary storage
- 1004: Communication device
- 1005: Input device
- 1006: Output device

## Claims

1. A network node, comprising:
a receiver configured to receive information on an information element possessed by a user device;
a controller configured to determine whether the information element possessed by the user device needs to be updated based on the information on the information element possessed by the user device and information on an information element possessed by a network; and
a transmitter configured to transmit the information element to the user device based on the determination result.

2. The network node as claimed in claim 1, wherein
the information on the information element possessed by the user device is first information for identifying Operator Defined Access Categories (ODAC) included in a location registration request message; and
the information on the information element possessed by the network is second information for identifying ODAC.

3. The network node as claimed in claim 2, wherein the controller is configured to determine whether the information element possessed by the user device needs to be updated by comparing the first information for identifying the ODAC with the second information for identifying the ODAC.

4. The network node as claimed in claim 1, wherein
the information on the information element possessed by the user device is acknowledgement returned in response to ODAC transmitted to the user device; and
based on the acknowledgement, the controller stores first information for identifying the ODAC transmitted to the user device in association with the user device.

5. The network node as claimed in claim 4, wherein
the information on the information element possessed by the network is second information for identifying ODAC; and
when receiving a location registration request message from the user device, the controller determines whether the information element possessed by the user device needs to be updated by comparing the first information for identifying the ODAC with the second information for identifying the ODAC.
